Europäisches Patentamt

European Patent Office

Office européen des brevets

(19)

(11) Publication number: **0 097 466**
**B1**

(12) EUROPEAN PATENT SPECIFICATION

(45) Date of publication of patent specification: **10.09.86**

(21) Application number: **83303386.3**

(22) Date of filing: **10.06.83**

(51) Int. Cl.⁴: **A 23 F 5/26**

(54) Process for producing coffee extract.

(30) Priority: **17.06.82 JP 104294/82**

(43) Date of publication of application:
**04.01.84 Bulletin 84/01**

(45) Publication of the grant of the patent:
**10.09.86 Bulletin 86/37**

(84) Designated Contracting States:
**CH DE FR GB IT LI**

(56) References cited:
**CA-A- 980 165**
**FR-A-2 131 875**
**US-A-3 790 689**
**US-A-3 810 766**

(73) Proprietor: **AJINOMOTO GENERAL FOODS INC.**
**8 Honshio-Cho**
**Shinjuku-Ku Tokyo (JP)**

(72) Inventor: **Matsuda, Osamu**
**2626-71 Kishioka-cho**
**Suzuka City Mie Pref (JP)**
Inventor: **Danno, Sadaji**
**1747-12 Ejima-cho**
**Suzuka City Mie Pref. (JP)**

(74) Representative: **Baillie, Iain Cameron et al**
**c/o Ladas & Parry Isartorplatz 5**
**D-8000 München 2 (DE)**

Courier Press, Leamington Spa, England.

## Description

The present invention relates to a process for producing coffee extract. More particularly, the invention relates to a process for producing coffee extract that is further processed by spray-drying or freeze-drying into a high-quality soluble coffee product.

The conventional method for producing soluble coffee products is described in M. Sivetz, "Coffee Technology," wherein roasted and ground coffee is extracted with heated water by the countercurrent method in a percolator set usually consisting of five to eight extraction columns connected in series, and the resulting coffee extract is subjected to drying and other after-treatments. A cycle of extraction in this method starts at the extraction column filled with the most spent roasted and ground (R & G) coffee and ends at the column filled with the freshest coffee. Therefore, in the fresher stage column, the coffee solids are extracted with a liquid that has a certain concentration of soluble coffee solids. As noted by Sivetz, the initial stage of extraction is performed by osmosis, so the efficiency of the extraction depends on the difference between the solids content of the coffee cells and the concentration of the liquor to be extracted. Since the extraction liquid usually contains a larger amount of soluble solids, it is readily understood that the efficiency of extraction is decreased toward the progressively fresher stage columns.

As is well known, the aromatic components of coffee are susceptible to heat damage and are desirably extracted and processed at low temperatures. In other words, the desired coffee extract is obtained with high efficiency by extracting a fresh column in the initial stage with a liquor having a minimum content of soluble coffee solids.

To achieve this object, the prior art relies on split extraction using a percolator set generally consisting of five to eight extraction columns. This process consists of the primary extraction wherein a column filled with freshly roasted and ground coffee and one or two subsequent columns are extracted with fresh water containing no soluble solids, and the secondary extraction wherein the columns that have gone through the primary extraction are subjected to the secondary contercurrent extraction by feeding the most spent column with heated water. In the primary extraction, the fresher column is extracted at a relatively low temperature (e.g., 80—150°C) to minimize the damage to the aromatic components by heat, whereas in the secondary extraction, the most of the columns for the secondary extraction is fed with high-temperature water (e.g., 160—190°C). Therefore, the split extraction uses two, rather than one, water lines. Since the fresher column is desirably extracted at low temperatures, the extract obtained in the later stage of the primary extraction has low concentrations of soluble solids, whereas the effluent initially obtained in the secondary extraction is mainly composed of the residue from the primary extraction. To eliminate any void in an extraction column filled with roasted and ground coffee, water weighing about 1.5 to 2.0 times as much as the coffee is generally necessary. In other words, a true secondary extraction cannot start in the column unless water weighing about 1.5 to 2.0 times as much as the coffee is "pushed out" of it. The advantages of the split extraction have been recognized in many prior patents (e.g., U.S. Patents No. 3,790,689, No. 3,810,766 and 3,965,269) and coffee makers have made efforts to use that process on a commercial scale. But their efforts have been hampered by the difficulty in achieving consistent operation in the overall process due mainly to the low concentration of draw obtained in the initial stage of the secondary extraction most of which is the residue from the columns that have gone through the primary extraction. The concentration of the combined secondary extracts including the initial draw varies with the volume of the liquor to be extracted, but is generally in the range of from about 3 to 8%, and to increase this concentration to the desired level, 80 to 90% of the waer must be removed. To remove that much water by, say, thermal concentration, at least 8 to 10 kcal of heat is necessary per gram of soluble coffee solids, but then the coffee solids undergo "heat damage" that adversely affects the quality of the final product.

## SUMMARY OF THE INVENTION

As a result of various studies to eliminate the defects of the conventional method of split extraction, the present inventors have successfully produced a high quality coffee extract by separating the stream in the secondary extraction step into two portions, an initial draw of a relatively low soluble solids concentration and a subsequent draw that has a higher solids concentration. The process has been found to markedly improve the flavor of soluble coffee while maintaining normally economic yields and productivity. The process consists of separating the processes of primary extraction, i.e., atmospheric solubilization, and secondary extraction, i.e., superatmospheric (autoclave) solubilization, and furthermore, the separate collection of those atmospheric solids carried into the autoclaving portion of the process by splitting the draw off of the autoclave extraction, thus collecting those types of solids "pushed out" prior to being subject to higher temperatures. In addition to the separate collections, different treatments to retain desirable and remove undesirable notes can be applied. Thus, the atmospheric draw can be freeze concentrated to preserve all its flavor/aroma characteristics, the "pushed out" atmospheric split of the autoclave draw can be stripped of aromatics that can then be retained and readded to this extract after thermally concentrating, and the extract from the second part of the autoclaving section containing essentially superatmospherically generated solubles can be upgraded during direct thermal concentration in which undesirable aromas are removed and not retained.

The problem of degradation of good flavor/aroma atmospherically derived components is not encountered in the process of the present invention as in standard processes where a significant portion is subjected to excessive temperatures or is combined with and lost from autoclave generated components.

The process has thus been found to provide improved operation at economically attractive yields and productivities.

As a result, a coffee extract having a higher level of aromatics and soluble solids may be obtained so as to obtain a final soluble coffee product having flavors characterized as stronger, richer and more R&G-like.

According to the present invention, water heated to between about 100 and 145°C is fed to the primary extraction zone, and water heated to between 160 and 190°C, preferably between 170 and 185°C, is fed to the secondary extraction zone. The primary extraction zone consists of at least two, preferably two or three, columns. If the primary extraction zone consists of two columns, the primary extract (that has passed the two columns) is drawn off until its volume is about 1.5 to 2.0 times as much as the R & G coffee loaded in one column, and subsequently, fresh water is supplied to the second column, and the resulting extract is supplied to an additional third column filled with the fresh R & G coffee. Then, the first extract weighing about 1.5 to 2.0 times as much as the coffee solids is drawn off the additional third column. The first column that has gone through the primary extraction is added to a series of columns for the secondary extraction and used as the freshest column from which the seondary extract is drawn off.

The secondary extraction zone consists of at least three, preferably three to five, columns. When three columns are used, heated fresh water is supplied to the most spent or extracted column (first column) and an initial draw weighing about 1.5 to 2.0 times as much as the coffee solids loaded in one column is drawn off the freshest column (third column) that has gone through the primary extraction and added to a series of columns for the secondary extraction. The primary component of the initial draw is the residue from the column last extracted in the primary extraction, and its solids content is low, say between about 3 to 6%. The inital draw is combined with a subsequent draw from the secondary extraction after concentration with heat. After drawing off the initial draw, a subsequent draw or extract weighing about 1.0 to 2.0 times as much as the coffee solids loaded in one column is drawn off. The subsequent extract is optionally combined with the concentrated initial draw and the mixture is further concentrated by heat.

The primary extract rich in the coffee aroma is freeze-concentrated and combined with the secondary extract (i.e., the mixture of the concentrated product of the initial draw and the subsequent draw). The combined extract is usually freeze-dried to a flavorful soluble coffee product. The freeze-drying may be replaced by any of the known drying methods such as spray-drying. In another embodiment, the secondary extract mixture may be stripped, e.g., by processes such as are described in U.S. Patent Nos. 4,107,339 and 4,281,023, of the aromatic components before concentration with heat, and after the extract mixture is concentrated with heat, the aromatic components are added to it, or added back to the primary extract before freeze-concentration to produce a coffee extract with enhanced aroma.

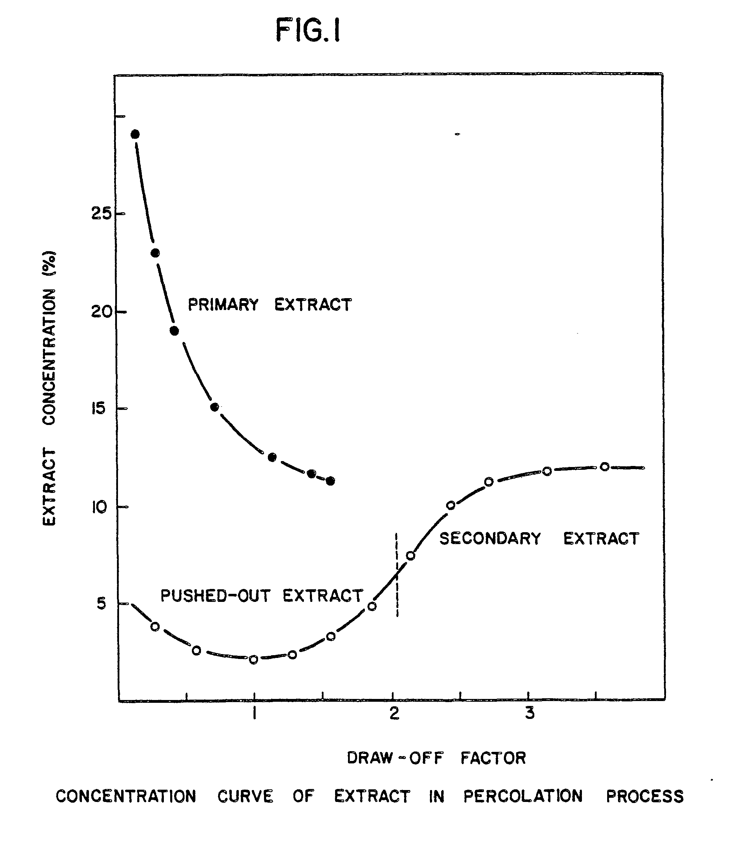

The solids content of the initial draw is from about 2 to 4%, and that of the subsequent draw is from about 5 to 12%, usually about 10%. The volume of the initial draw is small and its solids content is relatively low, so it can be concentrated by application of heat and combined with the subsequent draw into the desired concentrated coffee extract without causing much adverse effects on its quality. The subsequent draw has a relatively high solids concentration, so it can be concentrated with a minimum of heat and hence with minimum damage to the coffee aroma. The profile of coffee solids concentration in each step of the process of the present invention is depicted in Fig. 1.

Sample of soluble coffee were prepared by the process of the present invention and their palatability was compared in organoleptic tests (conducted, and participated in, by trained panelists) with coffee samples prepared by the conventional split extraction method.

The coffee product prepared from the extract of the present invention was more rich in flavor and body than the conventional product and had many characteristics of "regular coffee" brewed from roasted and ground coffee beans. The most significant feature is that the product of the present invention was pleasingly titratable activity and yet had high pH, and the acidity-forming acid gave body to the coffee and made of it a mellow and thick product.

BEST MODE FOR CARRYING OUT THE INVENTION

The present invention is now described in more detail by reference to the following example.

Example

Coffee beans roasted by a conventional method were ground to such a degree that particles coarser than 8 mesh accounted for 45 to 75% of the total weight and the so ground coffee was loaded in the first of the columns for the primary extraction. The first column was initially fed with water heated at 145°C. The second column was filled with similarly roasted and ground coffee beans, and was also fed with the draw from the first column. An extract about 1.5 times as much as the coffee load was drawn off the second column. Then, fresh water heated at 145°C was supplied to the second column, and the draw from the column was supplied to the third column that had been filled with freshly roasted and ground coffee beans. An extract weighing about 1.5 times as much as the coffee load was drawn off the third column, which was then fed with fresh water heated at 145°C. The subsequent columns were subjected to the primary extraction by the same procedure.

The columns that went through the primary extraction were then subjected to the secondary extraction. The first column was fed with heated water (ca. 180°C) by means of a pump different from that used for the primary extraction, and the resulting extract was directed to the second column. The extract from the second column was further directed to the third column, and the resulting extract was drawn off the third column. Therefore, the secondary extraction was carried out with at least three columns connected in series. An initial draw weighing about 2.1 times as much as the coffee load was drawn off from the third column, and a subsequent extract weighing about 1.5 times as much as the coffee load was further drawn off. The initial draw of lower concentration (3.5% solids) was, after concentration in an evaporator by heat, combined with the subsequent extract for further use. The subsequent extract with higher concentration (8.3% solids) after stripping of aromas was combined with the initial draw, and concentrated in an evaporator by heat into a coffee extract having the desired concentration (38.3% solids). The previously obtained primary extract (18.0% solids) after addition of the stripped aromas rich in flavor was freeze-concentrated into a flavorful, highly concentrated coffee extract. The two coffee extracts were combined and freeze-dried into a high quality flavorful instant coffee having flavor notes characterized as stronger, richer and more R & G-like.

## Claims

1. A continuous countercurrent proces for producing a high quality coffee extract by split extraction consisting of the primary atmospheric extraction wherein water having a relatively low temperature is fed to two or more columns each filled with fresh roasted and ground coffee beans and the secondary autoclave extraction wherein water having a relatively high temperature is fed to at least three columns that have been subjected to the primary extraction, characterized in that an initial draw of said secondary extraction having a low coffee soluble solids content with a flavor quality approaching that of the extract of the primary extraction and a subsequent draw of said secondary extraction having a high coffee soluble solids content with a lower flavor quality are separately drawn off in said secondary extraction.

2. A process according to Claim 1 wherein the extract obtained by said primary extraction and the initial draw and the subsequent draw of said secondary extraction are stripped separately and/ or concentrated and recombined to achieve different flavor characteristics as preferred.

3. A process according to Claim 2 wherein said initial draw of said secondary extraction is concentrated and then combined with said subsequent draw of said secondary extraction, said combination then being stripped of aromatics and further concentrated, following which processing said aromatics are recombined with the extract obtained by said primary extraction and said extract is then freeze concentrated and combined with the above said concentrated mixture of said initial draw and said subsequent draw.

4. A process according to Claim 2 wherein the initial draw is stripped of aromatics which are retained and readded to the extract of said primary extraction after concentration and the subsequent draw is concentrated and undesirable aromas and flavors are removed.

5. A process according to Claims 3 or 4 wherein the combination of extract and of initial draw and subsequent draw mixture is dried to produce a high quality soluble coffee product having stronger, richer and G & G-like flavor notes.

6. A process according to Claim 5 in which the combination is freeze-dried.

## Patentansprüche

1. Kontinuierliches Gegenstromverfahren zum Erzeugen eines Kaffeextrakts hoher Qualität durch mehrstufige Extraktion, in deren unter atmosphärischen Bedingungen durchgeführter erster Extraktionsstufe Wasser unter relativ niedriger Temperatur zwei oder mehreren Kolonnen zugeführt wird, von denen jede mig frischgeröstegen und gemahlenen Kaffeebohnen gefüllt ist, und in einer zweiten Extraktionsstufe Wasser unter relative hoher Temperatur mindestens drei Kolonnen zugeführt wird, die der ersten Extraktionsstufe unterworfen worden sind, dadurch gekennzeichnet, daß ein in der zweiten Extraktionsstufe anfängliche erhaltener Extrakt mit einem niedrigen Gehalt an löslichen Kaffeefeststoffen, deren Geschmacksqualität der des Extraktes der ersten Extraktionsstufe darauffolgend erhaltener Extrakt mit einem hohen Gehalt an löslichen Kaffeefeststoffen von niedrigerer Geschmacksqualität in der zweiten Extraktionsstufe getrennt voneinander abgezogen werden.

2. Verfahren nach Anspruch 1, dadurch gekennzeichnet, daß der in der ersten Extraktionsstufe erhaltene Extrakt und der in der zweiten Extraktionsstufe anfänglich und der darauffolgend erhaltene Extrakt getrennt voneinander gestrippt und/ oder konzentriert und dann zur Erziehung von gewünschten unterschiedlichen Geschmackseigenschaften wiedervereinigt werden.

3. Verfahren nach Anspruch 2, dadurch gekennzeichnet, daß der in der zweiten Extraktionsstufe anfänglich erhaltene Extrakt konzentriert und dann mit dem in der zweiten Extraktionsstufe darauffolgend erhaltenen Extrakt vereinigt wird, daß die vereinigten Extrakte dann durch Strippen von Aromastoffen befreit und weiter konzentriert werden, worauf die Aromastoffe mit dem in der ersten Extraktionsstufe erhaltenen Extrakt wiedervereinigt werden und dieser dann gefrierkonzentriert und mit dem konzentrierten Gemisch des in der zweiten Extraktionsstufe anfänglich und des darauffolgend erhaltenen Extrakts vereinigt wird.

4. Verfahren nach Anspruch 2, dadurch gekennzeichnet, daß der in der zweiten Extraktionsstufe anfänglich erhaltene Extrakt durch Strippen von Aromastoffen befreit wird, die zurückgehalten und nach Konzentration wieder zu dem in der ersten Extraktionsstufe erhaltenen Extrakt zugesetzt werden, und daß der darauffolgend erhaltene Extrakt konzentriert wird und unerwünschte Aroma- und Geschmackstoffe von ihm entfernt werden.

5. Verfahren nach Anspruch 3 oder 4, dadurch gekennzeichnet, daß die Kombination des Extraktes der ersten Extraktionsstufe und des Gemisches aus dem in der zweiten Extraktionsstufe anfänglich und dem darauffolgend erhaltenen Extrakt getrocknet und dadurch ein löslicher Kaffee hoher Qualität erhalten wird, der stärkere, reichere Geschmacksmerkmale hat, die der eines gerösteten und gemahlenen Kaffees ähneln.

6. Verfahren nach Anspruch 5, dadurch gekennzeichnet, daß die Kombination gefriergetrocknet wird.

**Revendications**

1. Procédé à contre-courant continu de production d'un extrait de café de haute qualité par extraction divisée consistant en l'extraction atmosphérique primaire dans laquelle de l'eau ayant une témperature relativement basse est envoyée dans deux colonnes ou davantage remplies chacune de grains de café frais torréfiés et broyés et en l'extraction secondaire dans laquelle de l'eau ayant une température relativement élevée est envoyée dans au moins trois colonnes qui ont été soumises à l'extraction primaire, caractérisé en ce qu'un soutirage initial de cette extraction secondaire ayant une faible teneur en solides solubles du café dont la qualité de saveur se rapproche de celle de l'extrait de l'extraction primaire et un soutirage ultérieur de cette extraction secondaire ayant une teneur en solides solubles du café dont la qualité de saveur est inférieure sont soutirés séparément dans cette extraction secondaire.

2. Procédé suivant la revendication 1, dans lequel l'extrait obtenu par cette extraction primaire et le soutirage initial et le soutirage ultérieur de cette extraction secondaire sont rectifiés séparément et/ou concentrés et recombinés pour réaliser à volontés des caractéristiques de saveur différentes.

3. Procédé suivant la revendication 2, dans lequel ce soutirage initial de cette extraction secondaire est concentré puis combiné avec ce soutirage de cette extraction secondaire, cette combinaison étant alors débarrassée des constituants aromatiques et à nouveau concentrée, traitement après lequel ces constituants aromatiques sont recombinés avec l'extrait obtenu par cette extraction primaire et cet extrait est alors concentré par congélation et combiné au mélange concentré de ce soutirage initial et de ce soutirage ultérieur dont il a été question ci-dessus.

4. Procédé suivant la revendication 2, dans lequel le soutirage initial est débarrassé des constituants aromatiques qui sont retenus et rajoutés à l'extrait de cette extraction primaire après concentration, et le soutirage ultérieur est concentré et les aromes et saveurs indésirables sont éliminés.

5. Procédé suivant les revendications 3 et 4, dans lequel la combinaison de l'extrait et du soutirage initial de mélange de soutirages ultérieur est séchée pour produire un produit de café soluble de haute qualité ayant des notes de saveur plus fortes, plus riches et plus semblables au café torréfié et broyé.

6. Procédé suivant la revendication 5, dans lequel la combinaison est séchée par congélation.

# FIG.I

CONCENTRATION CURVE OF EXTRACT IN PERCOLATION PROCESS